# EUROPÄISCHE PATENTANMELDUNG

(11) **EP 2 723 044 A1**
(43) Veröffentlichungstag der Anmeldung: **23.04.2014**
(21) Anmeldenummer: 13188442.1
(22) Anmeldetag: 14.10.2013
(51) Int. Cl.: H04L 29/12, H04L 12/40, B62D 59/00

(54) **Rangierantrieb mit flexibler Adressierung**

(30) Priorität: 22.10.2012 DE 202012010079 U
(71) Anmelder: Truma Gerätetechnik GmbH & Co. KG, 85640 Putzbrunn (DE)
(72) Erfinder: Aemisegger, Steve, 81547 München (DE); Gumpp, Daniel, 86356 Neusäss (DE); Müller, Jochen, 85665 Moosach (DE); Schmid, Tobias, 85435 Erding (DE); Müssler, Klaus, 85235 Egenburg (DE); Fernandez, Ana María, 81739 München (DE); Müller, Jörg, 85658 Egmating (DE); Schaurer, Oliver, 85445 Oberding (DE); Möhring, Mario, 85408 Gammelsdorf (DE); Venschott, Mathias, 81825 München (DE); Thiel, Stefan, 83022 Rosenheim (DE); Zawadski, Kamil, 85540 Haar (DE)
(74) Vertreter: Prinz & Partner

(57) **Zusammenfassung**

Ein Rangierantrieb (24, 30) für einen Anhänger (10) hat eine Zentraleinheit (30) und mindestens zwei Antriebseinheiten (24), wobei die Zentraleinheit (30) mit den Antriebseinheiten (24) über ein Bussystem kommuniziert. Die Zentraleinheit (30) weist ein Adressiermodul (40) auf, und jede Antriebseinheit (24) weist ein Adressmodul (42) auf, in dem temporär eine von der Zentraleinheit (30) zugewiesene Adresse gespeichert werden kann.

## Beschreibung

Die Erfindung betrifft einen Rangierantrieb für einen Anhänger.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Um komplexere Antriebsstrategien verwirklichen zu können und um die dabei anfallenden Informationen besser verarbeiten zu können, kann ein Datenbus verwendet werden, an den die Zentraleinheit und die Antriebseinheiten angeschlossen sind. Auf diese Weise lässt sich die Kommunikation zwischen der Zentraleinheit und den Antriebseinheiten fehlersicher bewerkstelligen. Allerdings ist ein gewisser Aufwand damit verbunden, die verschiedenen Antriebseinheiten korrekt adressieren zu können.

Die Aufgabe der Erfindung besteht darin, ein Rangiersystem zu schaffen, bei dem die verschiedenen Antriebseinheiten mit geringem Aufwand und flexibel adressiert werden können.

Zur Lösung dieser Aufgabe ist erfindungsgemäß ein Rangierantrieb für einen Anhänger vorgesehen, mit einer Zentraleinheit und mindestens zwei Antriebseinheiten, wobei die Zentraleinheit mit den Antriebseinheiten über ein Bussystem kommuniziert, wobei die Zentraleinheit ein Adressiermodul aufweist und jede Antriebseinheit ein Adressmodul, in dem temporär eine von der Zentraleinheit zugewiesene Adresse gespeichert werden kann. Die Erfindung beruht auf dem Grundgedanken, für die Antriebseinheiten keine fest codierten Adressen zu verwenden, sondern den vorhandenen Antriebseinheiten beim Einschalten des Rangiersystems eine Adresse zuzuweisen. Dies ermöglicht, die vorhandenen Antriebseinheiten im Bedarfsfall auszutauschen, ohne dass dabei darauf geachtet werden muss, ob für die jeweilige Anordnung der Antriebseinheit am Anhänger (beispielsweise "rechts" oder "links") auch eine "richtige" Antriebseinheit verwendet wird, also eine korrekt codierte. Es ist auch nicht notwendig, eine Antriebseinheit nach der Montage manuell entsprechend ihrer Anordnung am Anhänger zu codieren. Hierdurch erleichtern sich sowohl die Erstmontage als auch ein Austausch bei einer eventuellen Reparatur.

"Temporär" bedeutet dabei, dass die Adresse nicht dauerhaft vergeben bleibt, sondern auch wieder gelöscht werden kann. Dies kann bei jedem Ausschalten des Systems erfolgen oder auch nur dann, wenn das System aktiv zurückgesetzt wird. Bis zu einem solchen Reset wird eine einmal vergebene Adresse temporär gespeichert.

Gemäß einer Ausgestaltung der Erfindung ist vorgesehen, dass das Adressiermodul der Zentraleinheit über eine Spannungsversorgungleitung mit dem Adressmodul der Antriebseinheit verbunden ist. Bei dieser Ausgestaltung ist für die Adressvergabe keine zusätzliche Leitung zwischen der Zentraleinheit und den Antriebsleitungen notwendig, sondern es können die ohnehin vorhandenen Leitungen, mit denen die Antriebseinheiten mit elektrischer Energie versorgt werden, genutzt werden.

Gemäß einer alternativen Ausgestaltung ist vorgesehen, dass das Adressiermodul der Zentraleinheit über eine separate Steuerleitung mit dem Adressmodul der Antriebseinheit verbunden ist.

Vorzugsweise hat das Bussystem eine sternförmige Netzwerktopologie. Ein solches Netz gewährleistet, dass der Ausfall einer Antriebseinheit keine Auswirkung auf den Rest des Netzes hat. Außerdem kann ein solches Netzwerk leicht erweitert werden, beispielsweise von zwei Antriebseinheiten auf vier Antriebseinheiten.

Vorzugsweise ist vorgesehen, dass das Bussystem ein LIN-Bus ist. Bei einem LIN-Bus handelt es sich um eine kostengünstige Möglichkeit, die Kommunikation zwischen der Zentraleinheit und den Antriebseinheiten mit der nötigen Bandbreite zuverlässig zu gewährleisten.

Gemäß einer bevorzugten Ausführungsform der Erfindung ist vorgesehen, dass alle Antriebseinheiten bezüglich ihrer Elektrik und Elektronik hardware- und softwareseitig identisch sind. Dies erleichtert die Montage und den eventuellen Austausch der Antriebseinheiten.

Vorzugsweise ist vorgesehen, dass die Zentraleinheit nach Systemstart eine erste der Antriebseinheiten anspricht und dieser eine erste Adresse zuweist, dann die nächste der Antriebseinheiten anspricht und dieser die nächste Adresse zuweist, und so weiter, bis allen Antriebseinheiten eine Adresse zugewiesen ist. Bei dieser Ausgestaltung ist es ausreichend, in der Zentraleinheit einen vorgegebenen Adressraum zu definieren. Die Zentraleinheit beginnt nach dem Systemstart, die einzelnen Antriebseinheiten der Reihe nach anzusprechen und ihnen eine Adresse zuzuweisen, beispielsweise beginnend mit der höchsten Adresse, wobei dann den Antriebseinheiten der Reihe nach jeweils die nächste Adresse zugewiesen wird. Es ist dabei nicht notwendig, dass der Zentraleinheit bekannt ist, wie viele Antriebseinheiten vorhanden sind; es werden so lange Adressen vergeben, wie ansprechbare Antriebseinheiten vorhanden sind.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb; und
- Figur 2 in einer schematischen Draufsicht den Anhänger von Figur 1.

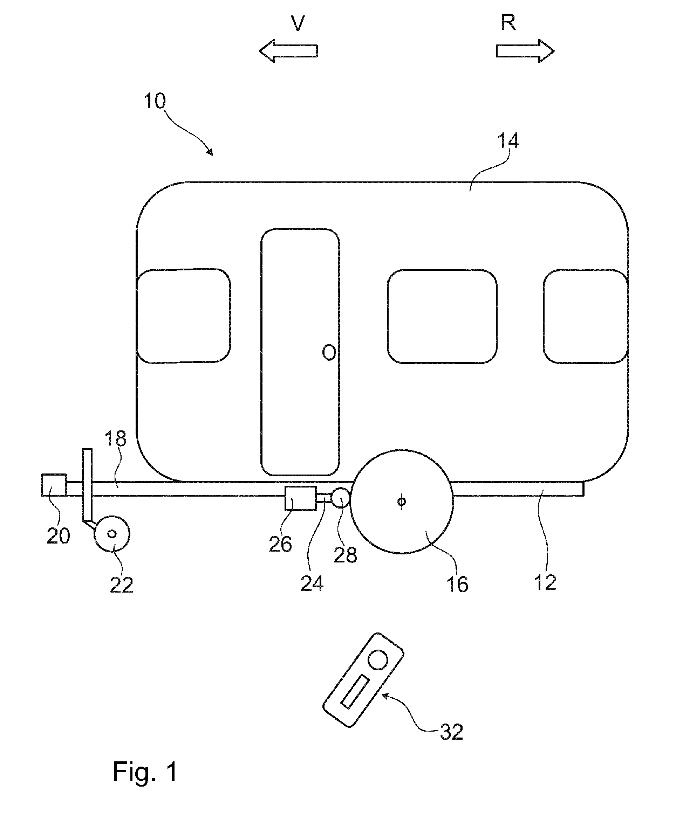

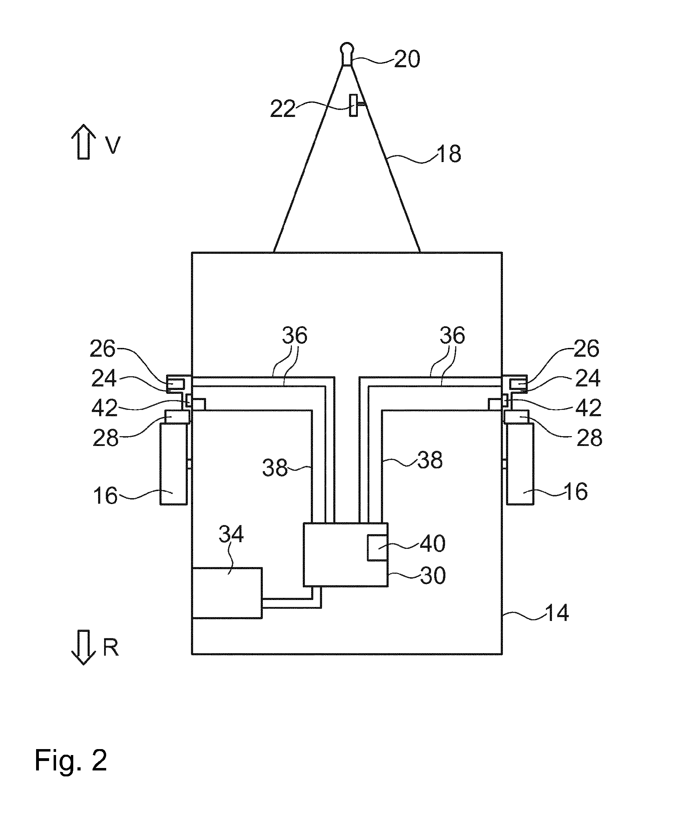

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden. Alle Antriebseinheiten 24 sind hinsichtlich der Elektrik und Elektronik hardware- und softwareseitig identisch aufgebaut. In mechanischer Hinsicht unterscheiden sie sich in Abhängigkeit davon, ob sie links oder rechts eingebaut werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt. Die Zentraleinheit 30 und die Antriebseinheiten 24 bilden ein sternförmiges Netzwerk, bei dem die Zentraleinheit den Master darstellt und jede Antriebseinheit einen Slave. Zur Kommunikation kann das LIN-Protokoll verwendet werden.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

Die Zentraleinheit weist ein Adressiermodul 40 auf, in dem ein Adressraum definiert ist, der die möglichen Netzwerkadressen für die verschiedenen Antriebseinheiten 24 vorgibt. In einem einfachen Beispiel kann angenommen werden, dass dieser Adressraum aus den Adressen 1 bis 4 besteht.

Bei einem Systemstart, also wenn die Zentraleinheit 30 mit Energie versorgt wird, adressiert sie der Reihe nach entsprechend einer vordefinierten Routine die verschiedenen Antriebseinheiten. Beispielsweise aktiviert sie zunächst die Antriebseinheit "rechts vorne", indem sie eingeschaltet wird, und vergibt dieser die höchste zur Verfügung stehende Adresse, also 4. Dann wird entsprechend der vorgegebenen Routine die nächste Antriebseinheit eingeschaltet, beispielsweise die Antriebseinheit "links vorne". Diese erhält die Netzwerkadresse 3. Handelt es sich um einen Rangierantrieb mit lediglich zwei Antriebseinheiten, kann dann keine weitere Antriebseinheit eingeschaltet und adressiert werden. Die Adressvergabe ist damit abgeschlossen, und das Bussystem ist betriebsbereit.

Beim Adressieren können entweder die Antriebseinheiten nacheinander eingeschaltet und jeweils beim Einschalten adressiert werden, oder die Antriebseinheiten können alle gleichzeitig eingeschaltet und dann der Reihe nach über die ihnen zugeordnete Steuerleitung 38 adressiert werden.

Handelt es sich jedoch um ein Rangiersystem mit vier Antriebseinheiten, werden auch die verbleibenden beiden Antriebseinheiten eingeschaltet und adressiert, also mit den Netzwerkadressen 2 und 1. Die Zentraleinheit kann dann mit sämtlichen Antriebseinheiten unter dem LIN-Protokoll kommunizieren.

Es ist beim Adressieren nicht entscheidend, ob die Adressen in absteigender oder aufsteigender Reihenfolge vergeben werden. Die Adressen könnten auch "durcheinander" vergeben werden. Entscheidend ist, dass die Adressen in einer vorbestimmten Reihenfolge zugeordnet werden.

Der besondere Vorteil dieser individuellen Adressvergabe beim Einschalten des Systems besteht darin, dass die Antriebseinheiten mit identischer Software geliefert werden können und keinerlei vorgegebene Codierung notwendig ist. Es muss daher bei der Montage der Antriebseinheiten auch nicht darauf geachtet werden, eine Antriebseinheit mit einer bestimmten Codierung an der richtigen Stelle am Anhänger anzubringen. Es muss lediglich darauf geachtet werden, dass die Kommunikationsleitung, die zur Adressvergabe (und später auch zur Steuerung) der entsprechenden Antriebseinheit verwendet wird, an den richtigen Anschluss der Zentraleinheit 30 angeschlossen wird, sodass die Zentraleinheit, wenn sie die Adresse für die Antriebseinheit "vorne rechts" vergibt, auch tatsächlich die Antriebseinheit vorne rechts anspricht.

Die Vergabe der Adressen kann bei jedem Start des Systems neu erfolgen. Alternativ kann vorgesehen sein, dass die Adressen beim ersten Systemstart vergeben und dann in den Antriebseinheiten gespeichert werden, bis sie zurückgesetzt bzw. gelöscht werden. Dies erfolgt insbesondere dann, wenn eine der Antriebseinheiten gegen eine neue ausgetauscht wurde. In diesem Fall erfolgt vorzugsweise eine vollständige Neuvergabe aller Adressen.

## Patentansprüche

1. Rangierantrieb (24, 30) für einen Anhänger (10), mit einer Zentraleinheit (30) und mindestens zwei Antriebseinheiten (24), wobei die Zentraleinheit (30) mit den Antriebseinheiten (24) über ein Bussystem kommuniziert, wobei die Zentraleinheit (30) ein Adressiermodul (40) aufweist und jede Antriebseinheit (24) ein Adressmodul (42), in dem temporär eine von der Zentraleinheit (30) zugewiesene Adresse gespeichert werden kann.

2. Rangierantrieb nach Anspruch 1, **dadurch gekennzeichnet, dass** das Adressiermodul (40) der Zentraleinheit (30) über eine Spannungsversorgungleitung (36) mit dem Adressmodul (42) der Antriebseinheit (24) verbunden ist.

3. Rangierantrieb nach Anspruch 1, **dadurch gekennzeichnet, dass** das Adressiermodul (40) der Zentraleinheit (24) über eine separate Steuerleitung (38) mit dem Adressmodul (42) der Antriebseinheit (24) verbunden ist.

4. Rangierantrieb nach einem der vorhergehenden Ansprüche, **dadurch gekennzeichnet, dass** das Bussystem eine sternförmige Netzwerktopologie hat.

5. Rangierantrieb nach einem der vorhergehenden Ansprüche, **dadurch gekennzeichnet, dass** das Bussystem ein LIN-Bus ist.

6. Rangierantrieb nach einem der vorhergehenden Ansprüche, **dadurch gekennzeichnet, dass** alle Antriebseinheiten (24) hardware- und softwareseitig identisch sind.

7. Rangierantrieb nach einem der vorhergehenden Ansprüche, **dadurch gekennzeichnet, dass** die Zentraleinheit (30) nach Systemstart eine erste der Antriebseinheiten (24) anspricht und dieser eine erste Adresse zuweist, dann die nächste der Antriebseinheiten (24) anspricht und dieser die nächste Adresse zuweist, und so weiter, bis allen Antriebseinheiten eine Adresse zugewiesen ist.

8. Rangierantrieb nach Anspruch 7, **dadurch gekennzeichnet, dass** die Adressen in beliebig eindeutiger Reihenfolge vergeben werden, insbesondere in absteigender Reihenfolge.
